# EUROPÄISCHE PATENTSCHRIFT

(11) **EP 3 491 064 B1**
(45) Veröffentlichungstag und Bekanntmachung des Hinweises auf die Patenterteilung: **01.09.2021**
(21) Anmeldenummer: 17742263.1
(22) Anmeldetag: 26.07.2017
(51) Int. Cl.: C08L 75/04

(54) **POLYMERDISPERSIONEN MIT VERRINGERTER EMISSION VON ACETALDEHYD**
POLYMER DISPERSIONS WITH REDUCED EMISSION OF ACETALDEHYDE
DISPERSIONS POLYMÈRES À ÉMISSION D'ACÉTALDÉHYDE RÉDUITE

(30) Priorität: 01.08.2016 EP 16182168
(43) Veröffentlichungstag der Anmeldung: 05.06.2019
(73) Patentinhaber: Stahl International B.V., 5145 PE Waalwijk (NL)
(72) Erfinder: HAEBERLE, Karl, 67346 Speyer (DE); WEGNER, Brigitte, 67354 Roemerberg (DE); SCHEIDL, Helfried, 67159 Friedelsheim (DE); TOMOVIC, Zeljko, 49448 Lemfoerde (DE); OTERO MARTINEZ, Iran, 32351 Stemwede (DE)
(74) Vertreter: V.O.
(86) Internationale Anmeldenummer: PCT/EP2017/068834
(87) Internationale Veröffentlichungsnummer: WO 2018/024559

(56) Entgegenhaltungen:
- WO-A1-94/10231
- WO-A1-2015/110403
- US-A- 5 143 954
- US-A- 6 121 355
- US-A1- 2007 191 256
- US-A1- 2012 132 851
- US-A1- 2016 024 319

## Beschreibung

Die vorliegende Erfindung betrifft wässrige Polymerdispersionen enthaltend wenigstens eine Verbindung V ausgewählt aus Trimethylolpropantriacetoacetat, Ethylenbis(acetoacetamid), Malonsäurebisamid , Dimethyl-1,3-Acetondicarboxylat, Malonsäuredihydrazid, 2-Cyanoacetoacetamid, Methylcyanoacetat, 2-Cyano-N-(2-hydroxyethyl)acetamid und Methyl 2-(2-hydroxyethylcarbamoyl)ethanol und insbesondere 2-Cyano-N-(2-hydroxyethyl)acetamid und Methyl 2-(2-hydroxyethylcarbamoyl)ethanol..

Polymerdispersionen werden in vielen Bereichen der Technik eingesetzt. Breite Verwendung finden sie zum Beispiel zur Beschichtung von Oberflächen oder zum Imprägnieren oder Verkleben von Substraten.

Dabei ist bekannt, dass Polymerdispersionen erhaltende Beschichtungen, Imprägnierungen oder Verklebungen zu Emissionen organischer Substanzen neigen, die zu Geruchsbelästigungen oder im Fall von hohen Konzentrationen zu Unwohlsein führen können. Dabei sind abgeschlossene Räume, beispielsweise im Inneren von Gebäuden oder Fahrzeugen, beispielsweise Automobilen, besonders betroffen. Ein Beispiel für solche Emissionen ist die Emission von Aldehyden, insbesondere Formaldehyd oder Acetaldehyd.

EP 2 138 520 A2 beschreibt ein Verfahren zur Herstellung von Polyurethanschaumstoffen mit erniedrigter Formaldehydemission unter Verwendung von Verbindungen mit mindestens einer Carbonsäureamidgruppe und mindestens einer Nitrilgruppe.

WO 2015/082242 A1 beschreibt ein Verfahren zur Herstellung von Polyurethanen mit reduzierter Aldehydemission unter Verwendung von Sulfinsäurederivaten und/oder Sulfonsäurederivaten. Die so erhaltenen Schäume zeigen eine deutlich verminderte Emission von Formaldehyd.

WO 2015/082316 A1 beschreibt die Verwendung bestimmter CH-acider Verbindungen zur Herstellung von Polyurethanen, insbesondere Polyurethanschäumen. Als Katalysatoren werden dabei obligat einbaubare Aminkatalysatoren verwendet.

Die so erhaltenen Schäume zeigen eine deutlich verminderte Emission von Formaldehyd.

Die genannten Schriften gehen nicht auf die Verminderung von Aldehydemissionen in wässrigen Polymerdispersionen ein. Sie gehen ebenfalls nicht auf die Verminderung der Emission von Acetaldehyd ein. Es hat sich zudem gezeigt, dass Zusätze, die die Emission von Formaldehyd reduzieren, nicht immer genau so effizient die Emission von Acetaldehyd reduzieren.

Aufgabe der vorliegenden Erfindung war es, Polymerdispersionen, insbesondere Polyurethandispersionen bereit zu stellen, die als solche oder nach der Verarbeitung zu Beschichtungen oder Filmen eine verringerte Emission organischer Verbindungen, insbesondere eine verminderte Emission von Aldehyden wie Acetaldehyd zeigen.

Die Aufgabe wurde gelöst durch wässrige Polymerdispersionen enthaltend wenigstens eine Verbindung V ausgewählt aus Trimethylolpropantriacetoacetat, Ethylenbis(acetoacetamid), Malonsäurebisamid , Dimethyl-1,3-Acetondicarboxylat, Malonsäuredihydrazid, 2-Cyanoacetoacetamid, Methylcyanoacetat, 2-Cyano-N-(2-hydroxyethyl)acetamid und Methyl 2-(2-hydroxyethylcarbamoyl)ethanol und insbesondere 2-Cyano-N-(2-hydroxyethyl)acetamid und Methyl 2-(2-hydroxyethylcarbamoyl)ethanol.

Erfindungsgemäße wässrige Polymerdispersionen enthalten mindestens ein Polymer. In der Regel enthalten erfindungsgemäße wässrige Polymerdispersionen 10 bis 75 Gew% an Polymer, bezogen auf die Dispersion. Geeignete Polymerdispersionen sind dem Fachmann an sich bekannt.

Bevorzugt handelt es sich bei erfindungsgemäßen wässrigen Polymerdispersionen um wässrige Polyurethandispersionen (PUD).

Wässrige Polyurethandispersionen enthalten mindestens ein Polyurethan. In der Regel enthalten erfindungsgemäße wässrige Polyurethandispersionen 10 bis 75 Gew% an Polyurethan, bezogen auf die Dispersion. Geeignete Polyurethandispersionen sind dem Fachmann an sich bekannt.

"Wässrig" bedeutet im Sinne der vorliegenden Erfindung, dass das Dispergiermittel mindestens 50 Gew%, bevorzugt mindestens 70 Gew%, besonders bevorzugt mindestens 90 Gew% und insbesondere bevorzugt mindestens 95 Gew% Wasser enthält, jeweils bezogen auf das Dispergiermittel. In einer Ausführungsform besteht das Dispergiermittel aus Wasser.

Überraschenderweise wurde gefunden, dass der Zusatz von Verbindungen V ausgewählt aus Trimethylolpropantriacetoacetat, Ethylenbis(acetoacetamid), Malonsäurebisamid , Dimethyl-1,3-Acetondicarboxylat, Malonsäuredihydrazid, 2-Cyanoacetoacetamid, Methylcyanoacetat, 2-Cyano-N-(2-hydroxyethyl)acetamid und Methyl 2-(2-hydroxyethylcarbamoyl)ethanol und insbesondere 2-Cyano-N-(2-hydroxyethyl)acetamid und Methyl 2-(2-hydroxyethylcarbamoyl)ethanol wässrige Polymerdispersionen, bevorzugt Polyurethandispersionen, ergibt, die eine reduzierte Emission von organischen Verbindungen, insbesondere Acetaldehyd, zeigen oder die sich zu Beschichtungen mit deutlich reduzierter Emission von Acetaldehyd verarbeiten lassen.

Verbindungen V sind Trimethylolpropantriacetoacetat, Ethylenbis(acetoacetamid), Malonsäurebisamid und Malonsäuredihydrazid, Dimethyl-1,3-Acetondicarboxylat, 2-Cyanoacetoacetamid, Methylcyanoacetat, 2-Cyano-N-(2-hydroxyethyl)acetamid und Methyl 2-(2-hydroxyethylcarbamoyl)ethanol und insbesondere 2-Cyano-N-(2-hydroxyethyl)-acetamid und Methyl 2-(2-hydroxyethylcarbamoyl)ethanol.

Besonders bevorzugt ist Verbindung V gewählt aus Trimethylolpropantriacetoacetat, Ethylen-bis(acetoacetamid), Malonsäurebisamid und Malonsäuredihydrazid.

Verbindung V wird erfindungsgemäßen wässrigen Polymerdispersionen bevorzugt in Mengen von 0,01 bis 10 Gew.-%, besonders bevorzugt in Mengen von 0,05 bis 8 Gew.-%, ganz besonders bevorzugt in Mengen von 0,1 bis 7 Gew.-%, bezogen auf den nichtflüchtigen Anteil der Polymerdispersionen, das heißt auf die Polymerdispersion ohne Lösungsmittel.

Die Zugabe von Verbindung V kann vor, während oder nach der Herstellung der Polymerdispersionen erfolgen.

Bei erfindungsgemäßen Polymerdispersionen kann es sich zum Beispiel um Primärdispersionen oder um Sekundärdispersionen handeln.

Erfindungsgemäße Polymerdispersionen, insbesondere erfindungsgemäße PUDs, können nach allen gängigen Herstellverfahren hergestellt werden. Prozesse zur Herstellung von Polymerdispersionen sind dem Fachmann an sich bekannt.

Primärdispersionen können zum Beispiel durch Suspensionspolymerisation oder Emulsionspolymerisation hergestellt werden.

Die wässrigen Sekundärpolymerdispersionen werden in der Regel durch die folgenden Verfahrensschritte hergestellt: Im ersten Verfahrensschritt wird zunächst eine polymere Verbindung, z.B. ein radikalisch polymerisiertes Polymer (kurz Polymer genannt), ein Polyaddukt oder ein Polykondensat lösungsmittelfrei oder gegebenenfalls in einem organischen Lösungsmittel hergestellt. In einem späteren Verfahrensschritt wird das so hergestellte Polymer in Wasser dispergiert.

Bei der polymeren Verbindung kann es sich im Einzelnen z.B. um einen Polyester, ein Polyamid oder vorzugsweise um ein durch radikalische Polymerisation hergestelltes Polymer und insbesondere um ein Polyurethan handeln.

Geeignete ethylenisch ungesättigte Monomere für die radikalische Polymerisation sind insbesondere sogenannte Hauptmonomere, ausgewählt aus C₁-C₂₀-Alkyl(meth)acrilaten, Vinylestern von bis zu 20 C-Atomen enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen oder deren Gemische.

Als Hauptmonomere zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren und Chloropren sowie Ethylen, Propylen und Isobutylen genannt.

Die Hauptmonomeren werden auch vorzugsweise im Gemisch eingesetzt.

Vinylaromatische Verbindungen wie Styrol werden z.B. häufig im Gemisch mit C₁-C₂₀-Alkyl-(meth)acrylaten, insbesondere mit C₁-C₈-Alkyl(meth)acrylaten, oder nicht aromatischen Kohlenwasserstoffen wie Isopren oder vorzugsweise Butadien eingesetzt.

Besonders bevorzugt sind Alkyl(meth)acrylate, Styrol und deren Gemische als Hauptmonomere.

Vorzugsweise besteht das radikalisch polymerisierte Polymer zu mindestens 40, besonders bevorzugt zu mindestens 60 Gew.-% aus den Hauptmonomeren.

Neben den Hauptmonomeren enthält das Polymer vorzugsweise ethylenisch ungesättigte Monomere mit einer oder mehreren Carbonsäuregruppen, z.B. Acrylsäure, Methacrylsäure, Maleinsäure, Fumarsäure, Maleinsäure- bzw. Fumarsäurehalbester oder Itaconsäure. Der Gehalt dieser Monomeren wird so gewählt, dass das Polymer die oben angegebene Säurezahl hat. Statt der genannten Säuren kann das Polymer auch die entsprechenden Anhydride enthalten, die zu den Säuren verseift werden.

Weitere ethylenisch ungesättigte Monomere sind insbesondere Hydroxylgruppen enthaltende Monomere wie Hydroxyalkyl(meth)acrylate, z.B. Hydroxypropyl- oder Hydroxyethyl(meth)acrylat.

Polymere mit einem Gehalt an Hydroxylgruppen können z.B. mit Melaminharzen oder Polyisocyanaten, insbesondere wasseremulgierbaren Polyisocyanaten vernetzt werden. Der Gehalt der Hydroxylgruppen enthaltenden Monomere wird vorzugsweise so gewählt, dass die OH-Zahl des Polymeren 0 bis 200, besonders bevorzugt 0 bis 150, ganz besonders bevorzugt 0 bis 100 und insbesondere 0 bis 30 mg KOH/g Polymer (DIN 53 240) beträgt. Des Weiteren kann das Polymer z.B. auch einen Gehalt an Monomeren mit Carbonylgruppen aufweisen und so z.B. mit Polyhydraziden vernetzbar sein.

Das gewichtsmittlere Molekulargewicht (M_{w}) der polymeren Verbindung beträgt vorzugsweise 20.000 bis 500.000, besonders bevorzugt 50.000 bis 200.000 und ganz besonders bevorzugt 70.000 bis 120.000 g/mol (bestimmt durch Gelpermeationschromatographie, mit Polystyrol als Standard).

Als Lösungsmittel bei der Polymerisation eignen sich insbesondere solche mit einem Siedepunkt unter 100°C bei 1 bar, bzw. solche die mit Wasser ein Azeotrop mit einem Siedepunkt unter 100°C bei 1 bar bilden, so dass das Lösungsmittel bei Bedarf später leicht wieder entfernt werden kann.

Als Lösungsmittel genannt seien zum Beispiel Butanol, Isobutanol, Propanol, Ethanol, Aceton und Methanol.

Die radikalische Polymerisation der ethylenisch ungesättigten Monomeren kann in bekannter Weise rein thermisch oder vorzugsweise in Gegenwart von Initiatoren erfolgen. Als radikalbildende Initiatoren genannt seien z.B. Azobiscarbonsäureamide, Azobiscarbonsäurenitrile, Persäureester oder Peroxide. Die Menge des Initiators beträgt vorzugsweise 0,2 bis 5, besonders bevorzugt 0,5 bis 3 Gew.-%, bezogen auf die Monomeren. Die Polymerisationstemperatur beträgt vorzugsweise 50 bis 150°C, besonders bevorzugt 80 bis 130°C. Gegebenenfalls können auch Regler, z.B. Mercaptoethanol, Tertiärdodecylmercaptan oder Diisopropylxanthogensulfid, vorzugsweise in Mengen von 0 bis 3 Gew.-%, bezogen auf die Monomeren, zugesetzt werden.

Die Herstellung der polymeren Verbindung kann z.B. auch einstufig oder mehrstufig erfolgen.

Bevorzugt sind erfindungsgemäße wässrige Polymerdispersionen Polyurethandispersionen.

In einer Ausführungsform werden erfindungsgemäße PUDs hergestellt, indem man das vollständige Polyurethanmolekül in einem mit Wasser mischbaren, niedrig siedenden (Siedepunkt zum Beispiel kleiner als 100°C bei Normaldruck) Lösemittel aufbaut, die Lösung mit Wasser zusammen dispergiert, und das Lösemittel schließlich so gut wie vollständig abdestilliert. Als Lösungsmittel eignet sich zum Beispiel Aceton ("Aceton Verfahren").

In anderen Ausführungsformen werden Prepolymere direkt in Wasser und Kettenverlängerer unter hohen Scherkräften dispergiert und die Kettenverlängerung findet in Gegenwart der wässrigen Phase, jedoch in den dispergierten Teilchen statt, wobei neben der gewünschten Umsetzung auch die Reaktion von Wasser mit den Isocyanatgruppen zur Kettenverlängerung beiträgt. Beispiele für derartige Verfahren sind der Schmelz-Dispergier-Prozess oder das Prepolymer-Misch-Verfahren.

Polyurethandispersionen werden technisch häufig über das sogenannte "Präpolymer-Mischverfahren" hergestellt. Darin werden Polyurethane zunächst in einem organischen Lösungsmittel L, häufig N-Methylpyrrolidon, hergestellt und die so erhaltene Lösung des Polyurethans anschließend in Wasser dispergiert. Während und/oder nach deren Dispergierung in Wasser kann dann mittels einer Kettenverlängerung die Molmasse des Polyurethans weiter erhöht werden.

Erfindungsgemäße wässrige Polymerdispersionen enthalten in der Regel 90 bis 25 Gew% Wasser und gegebenenfalls noch andere Lösungsmittel, bezogen auf die Dispersion, wobei sich die Anteile an Polymer, Wasser, Lösungsmittel und sonstigen Zusatzstoffen auf 100 Gew.-% ergänzen.

Erfindungsgemäße wässrige Polyurethandispersionen enthalten mindestens ein Polyurethan. In der Regel enthalten erfindungsgemäße wässrige Polyurethandispersionen 10 bis 75 Gew.-% an Polyurethan, bezogen auf die Dispersion. Geeignete Polyurethandispersionen sind dem Fachmann an sich bekannt. In einer bevorzugten Ausführungsform enthalten erfindungsgemäße Polyurethandispersionen Polyurethane, die nach dem Präpolymermischungsverfahren hergestellt worden sind, insbesondere solche, wie sie nach dem unten beschriebenen erfindungsgemäßen Verfahren zur Herstellung von Polyurethandispersionen beschrieben werden.

Erfindungsgemäße wässrige Polyurethandispersionen enthalten in der Regel 90 bis 25 Gew.-% Wasser, bezogen auf die Dispersion.

Ein weiterer Gegenstand der vorliegenden Erfindung ist ein Verfahren zur Herstellung von Polyurethandispersionen, wobei man die wässrigen Polyurethandispersionen wie folgt herstellt:
I. Herstellung eines Polyurethans durch Umsetzung von
   a) mindestens einem mehrwertigen Isocyanat mit 4 bis 30 C-Atomen,
   b) Diolen, von denen
      b1) 10 bis 100 mol-%, bezogen auf die Gesamtmenge der Diole (b), ein Molekulargewicht von 500 bis 5000 aufweisen, und
      b2) 0 bis 90 mol-%, bezogen auf die Gesamtmenge der Diole (b), ein Molekulargewicht von 60 bis 500 g/mol aufweisen,
   c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und
   d) von den Monomeren (a), (b) und (c) verschiedene Monomere mit wenig-stens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
   zu einem Polyurethan, gegebenenfalls in Gegenwart eines Lösungsmittels L, und
II. anschließender Dispergierung des Polyurethans in Wasser,
   wobei Verbindung V vor, während oder nach Schritt I oder II zugegeben werden kann.

In einer anderen Ausführungsform werden erfindungsgemäße PUDs wie folgt hergestellt:
I. Herstellung eines Polyurethans durch Umsetzung von
   a) mindestens einem mehrwertigen Isocyanat mit 4 bis 30 C-Atomen,
   b) Diolen, von denen
      b1) 10 bis 100 mol-%, bezogen auf die Gesamtmenge der Diole (b), ein Molekulargewicht von 500 bis 5000 aufweisen, und
      b2) 0 bis 90 mol-%, bezogen auf die Gesamtmenge der Diole (b), ein Molekulargewicht von 60 bis 500 g/mol aufweisen,
   c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und
   d) von den Monomeren (a), (b) und (c) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
   zu einem Polyurethan in Gegenwart eines Lösungsmittels L und
II. anschließender Dispergierung des Polyurethans in Wasser,
III. wobei man nach oder während Schritt II gegebenenfalls Polyamine zusetzen kann,
wobei Verbindung V vor, während oder nach Schritt I, II oder III zugegeben werden kann.

Geeignete Lösungsmittel L sind Lösungsmittel, die die Komponenten a) bis d) sowie die aus ihnen hergestellten Polyurethane unter den Reaktionsbedingungen der Polyurethanherstellung zu lösen vermag. Geeignete Lösungsmittel L sind zum Beispiel N-Alkylpyrrolidone wie N-Methylpyrrolidon (NMP), N-Ethylpyrrolidon, N-Propylpyrrolidon, N-Butylpyrrolidon oder N-Cyclohexylpyrrolidon; Tetraalkylharnstoffe wie Tetramethylharnstoff, N-Acylmorpholine wie N-Methylmorpholin, N,N-Dimethylformamid, 1,3-Dioxolan, Aceton, Methylethylketon, Diisopropylketon, Methylisobutylketon, Methylacetat, Ethylacetat, Tetrahydrofuran. Des Weiteren kommen Ether, insbesondere Methylether, von Diolen wie Ethylenglykol, Diethylenglykol, Propylenglykol oder Dipropylenglykol in Betracht.

Bevorzugte Lösungsmittel L sind NMP, N-Ethylpyrrolidon, Dipropylenglykoldimethylether und Aceton.

Als Monomere a) kommen die üblicherweise in der Polyurethanchemie eingesetzten Polyisocyanate in Betracht, beispielsweise aliphatische, aromatische und cycloaliphatische Di- und Polyisocyanate, wobei die aliphatischen Kohlenwasserstoffreste beispielsweise 4 bis 12 Kohlenstoffatome und die cycloaliphatischen oder aromatischen Kohlenwasserstoffreste beispielsweise 6 bis 15 Kohlenstoffatome oder die araliphatischen Kohlenwasserstoffreste beispielsweise 7 bis 15 Kohlenstoffatome aufweisen, mit einer NCO-Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Diisocyanatopentan, Hexamethylendiisocyanat (1,6-Diisocyanatohexan), Octamethylendiisocyanat, Decamethylendiisocyanat, Dodecamethylendiisocyanat, Tetradecamethylendiisocyanat, Ester des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, das trans/trans-, das cis/cis- und das cis/trans-Isomere des 4,4'- oder 2,4'-Di(isocyanatocyclohexyl)methans, 1-Isocyanato-3,3,5- trimethyl-5-(isocyanatomethyl)cyclohexan (Isophorondiisocyanat), 2,2-Bis-(4-isocyanatocyclohexyl)-propan, 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, 1,4-Diisocyanatobenzol oder Diphenylether-4,4'-diisocyanat.

Es können auch Gemische der genannten Diisocyanate vorliegen.

Bevorzugt sind aliphatische und cycloaliphatische Diisocyanate, besonders bevorzugt sind Isophorondiisocyanat (IPDI), Hexamethylendiisocyanat (HDI), meta-Tetramethylxylylendiisocyanat (m-TMXDI) und 1,1-Methylenbis-[4-isocyanato]-cyclohexan (H₁₂MDI).

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cyclo-aliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42 g/mol) von 10 bis 60 Gew.-% bezogen auf das Di- und Polyisocyanat(gemisch), bevorzugt 15 bis 60 Gew.-% und besonders bevorzugt 20 bis 55 Gew.-%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanat-gruppen, insbesondere Tris(6-isocyanatohexyl)biuret oder dessen Gemische mit seinen höheren Homologen. Diese Biuretgruppen aufweisenden Polyisocyanate weisen im Allgemeinen einen NCO-Gehalt von 18 bis 22 Gew.-% und eine mittlere NCO-Funktionalität von 3 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können. Diese Urethan- und/oder Allophanatgruppen aufweisenden Polyisocyanate haben im Allgemeinen einen NCO-Gehalt von 12 bis 20 Gew.-% und eine mittlere NCO-Funktionalität von 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Uretonimin-modifizierte Polyisocyanate.

Die Polyisocyanate 1) bis 6) können im Gemisch, gegebenenfalls auch im Gemisch mit Diisocyanaten, eingesetzt werden.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 20 mol-% 2,4-Diisocyanatotoluol und 80 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte molare Mischungsverhältnis der aliphatischen zu aromatischen Isocyanate 4 : 1 bis 1 : 4 beträgt.

Als Verbindungen a) kann man auch Isocyanate einsetzen, die neben den freien Isocyanat-gruppen weitere verkappte Isocyanatgruppen, z.B. Uretdion- oder Urethangruppen tragen.

Gegebenenfalls können auch solche Isocyanate mitverwendet werden, die nur eine Isocyanatgruppe tragen. Im Allgemeinen beträgt ihr Anteil maximal 10 mol-%, bezogen auf die gesamte Molmenge der Monomere. Die Monoisocyanate tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI).

Als Diole b) kommen vornehmlich höhermolekulare Diole (b1) in Betracht, die ein Molekulargewicht von etwa 500 bis 5000, vorzugsweise von etwa 1000 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Neopentylglykol sowie Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol.

Ferner kommen auch Polycarbonat-Diole, wie sie z.B. durch Umsetzung von Phosgen mit einem Überschuss von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die von Hydroxycarbonsäuren der allgemeinen Formel HO-(CH₂)_{z}-COOH, wobei z eine Zahl von 1 bis 20, abgeleitet sind, z.B. epsilon-Caprolacton, β-Propiolacton, γ-Butyrolacton und/oder Methyl-epsilon-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxydiphenyl)-propan oder Anilin erhältlich. Besonders bevorzugt ist Polytetrahydrofuran mit einem Molekulargewicht von 500 bis 5000 g/mol, und vor allem 1000 bis 4500 g/mol.

Die Polyesterdiole und Polyetherdiole können auch als Gemische im Verhältnis 0,1 : 1 bis 1 : 9 eingesetzt werden.

Als Diole (b) können neben den Diolen (b1) noch niedermolekulare Diole (b2) mit einem Molekulargewicht von etwa 50 bis 500, vorzugsweise von 60 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentandiol-1,5 und Neopentylglykol bevorzugt werden.

Bevorzugt beträgt der Anteil der Diole (b1), bezogen auf die Gesamtmenge der der Diolen (b) 10 bis 100 mol-% und der Anteil der Diole (b2), bezogen auf die Gesamtmenge der Diole (b) 0 bis 90 mol-%. Besonders bevorzugt beträgt das Verhältnis der Diole (b1) zu den Diolen (b2) 0,2 : 1 bis 5 : 1, besonders bevorzugt 0,5 : 1 bis 2 : 1.

Die Monomere (c), die von den Diolen (b) verschieden sind, dienen im Allgemeinen der Vernetzung oder der Kettenverlängerung. Es sind im allgemeinen mehr als zweiwertige nichtaromatische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundären Aminogruppen tragen.

Alkohole mit einer höheren Wertigkeit als 2, die zur Einstellung eines gewissen Verzweigungs- oder Vernetzungsgrades dienen können, sind z.B. Trimethylolbutan, Trimethylolpropan, Trimethylolethan, Pentaerythrit, Glycerin, Zuckeralkohole, wie z.B. Sorbit, Mannit, Diglycerol, Threit, Erythrit, Adonit (Ribit), Arabit (Lyxit), Xylit, Dulcit (Galactit), Maltit oder Isomalt, oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen können im Präpolymer-Mischverfahren vor allem dann eingesetzt werden, wenn die Kettenverlängerung bzw. Vernetzung in Gegenwart von Wasser stattfinden soll (Schritt III), da Amine in der Regel schneller als Alkohole oder Wasser mit Isocyanaten reagieren. Das ist häufig dann erforderlich, wenn wässrige Dispersionen von vernetzten Polyurethanen oder Polyurethanen mit hohem Molgewicht gewünscht werden. In solchen Fällen geht man so vor, dass man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im Allgemeinen polyfunktionelle Amine des Molgewichtsbereiches von 32 bis 500 g/mol, vorzugsweise von 60 bis 300 g/mol, welche mindestens zwei primäre, zwei sekundäre oder mindestens eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan oder höhere Amine wie Triethylentetramin, Tetraethylenpentamin oder polymere Amine wie Polyethylenamine, hydrierte Poly-Acrylnitrile oder zumindest teilweise hydrolysierte Poly-N-Vinylformamide jeweils mit einem Molgewicht bis zu 2000, bevorzugt bis zu 1000 g/mol.

Die Amine können auch in blockierter Form, z.B. in Form der entsprechenden Ketimine (siehe z.B. CA-1 129 128), Ketazine (vgl. z.B. die US-A4 269 748) oder Aminsalze (s. US-A4 292 226) eingesetzt werden. Auch Oxazolidine, wie sie beispielsweise in der US-A 4 192 937 verwendet werden, stellen verkappte Polyamine dar, die für die Herstellung der Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Der Anteil an Polyaminen kann bis zu 10, bevorzugt bis zu 8 mol-% und besonders bevorzugt bis zu 5 mol-%, bezogen auf die Gesamtmenge der Komponenten (b) und (c) betragen.

Das im Schritt I hergestellte Polyurethan kann in der Regel bis zu 10 Gew.-%, bevorzugt bis zu 5 Gew.-% nicht abreagierte NCO-Gruppen aufweisen.

Das molare Verhältnis von NCO-Gruppen im Schritt I hergestellten Polyurethan zu der Summe aus primären und sekundären Aminogruppen im Polyamin wird im Schritt III in der Regel so gewählt, dass es zwischen 3 : 1 und 1 : 3, bevorzugt 2 : 1 und 1 : 2, besonders bevorzugt 1,5 : 1 und 1 : 1,5; ganz besonders bevorzugt bei 1:1 liegt.

Ferner können zum Kettenabbruch in untergeordneten Mengen, d.h. bevorzugt in Mengen von weniger als 10 mol-%, bezogen auf die Komponenten (b) und (c), Monoalkohole eingesetzt werden. Sie dienen hauptsächlich zur Begrenzung des Molgewichts des Polyurethans. Beispiele sind Methanol, Ethanol, iso-Propanol, n-Propanol, n-Butanol, iso-Butanol, sek-Butanol, tert-Butanol, Ethylenglykolmonomethylether, Ethylenglykolmonoethylether, 1,3-Propandiolmonomethylether, n-Hexanol, n-Heptanol, n-Octanol, n-Decanol, n-Dodecanol (Laurylalkohol) und 2-Ethylhexanol.

Um die Wasserdispergierbarkeit der Polyurethane zu erreichen, sind die Polyurethane neben den Komponenten (a), (b) und (c) aus von den Komponenten (a), (b) und (c) verschiedenen Monomeren (d), die wenigstens eine Isocyanatgruppe oder wenigstens eine gegenüber Isocyanatgruppen reaktiven Gruppe und darüber hinaus wenigstens eine hydrophile Gruppe oder eine Gruppe, die sich in hydrophile Gruppen überführen lässt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Bei den (potentiell) hydrophilen Gruppen kann es sich um nichtionische oder bevorzugt um ionische, d.h. kationische oder anionische, hydrophile Gruppen oder um potentiell ionische hydrophile Gruppen und besonders bevorzugt um anionische hydrophile Gruppen oder um potentiell anionische hydrophile Gruppen handeln.

Der Anteil der Komponenten mit (potentiell) hydrophilen Gruppen an der Gesamtmenge der Komponenten (a), (b), (c) und (d) wird im allgemeinen so bemessen, dass die Molmenge der (potentiell) hydrophilen Gruppen, bezogen auf die Gewichtsmenge aller Monomere (a) bis (b), 30 bis 1000, bevorzugt 50 bis 500 und besonders bevorzugt 80 bis 300 mmol/kg beträgt.

Als nichtionische hydrophile Gruppen kommen beispielsweise gemischte oder reine Polyalkylenglykolether wie Polyethylenglykolether aus vorzugsweise 5 bis 100, bevorzugt 10 bis 80 Ethylenoxid-Wiederholungseinheiten in Betracht. Die Polyethylenglykolether können auch Propylenoxid-Einheiten enthalten. Ist dies der Fall, so soll der Gehalt an Propylenoxid-Einheiten 50 Gew.-%, bevorzugt 30 Gew.-%, bezogen auf den gemischten Polyalkylenglykolether, nicht übersteigen.

Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (d).

Bevorzugte Monomere mit nichtionischen hydrophilen Gruppen sind das Polyethylenglykol und Diisocyanate, die einen endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Als Monomere mit potentiell anionischen Gruppen werden üblicherweise aliphatische, cycloaliphatische, araliphatische oder aromatische Mono- und Dihydroxycarbonsäuren in Betracht, die mindestens eine alkoholische Hydroxylgruppe oder eine primäre oder sekundäre Aminogruppe tragen.

Solche Verbindungen werden beispielsweise durch die allgemeine Formel

RG-R¹⁴-DG

dargestellt, worin
RG mindestens eine gegen Isocyanat reaktive Gruppe DG mindestens eine dispergieraktive Gruppe und R¹⁴ einen 1 bis 20 Kohlenstoffatome enthaltenden aliphatischen, cycloaliphatischen oder aromatischen Rest bedeutet.

Beispiele für RG sind -OH, -SH, -NH₂ oder-NHR¹⁵, worin R¹⁵ Methyl, Ethyl, iso-Propyl, n-Propyl, n-Butyl, iso-Butyl, sek-Butyl, tert-Butyl, Cyclopentyl oder Cyclohexyl sein kann.

Bevorzugt handelt es sich bei solchen Komponente z.B. um Mercaptoessigsäure, Mercaptopropionsäure, Thiomilchsäure, Mercaptobernsteinsäure, Glycin, Iminodiessigsäure, Sarkosin, Alanin, beta-Alanin, Leucin, Isoleucin, Aminobuttersäure, Hydroxyessigsäure, Hydroxypivalinsäure, Milchsäure, Hydroxybernsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure, N-Cyclohexylaminopropansulfonsäure, N-Cyclohexylaminoethansulfonsäure sowie deren Alkali-, Erdalkali- oder Ammoniumsalze und besonders bevorzugt um die genannten Monohydroxycarbon- und -sulfonsäuren sowie Monoaminocarbon- und -sulfonsäuren.

Ganz besonders bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel

HO-R¹¹-CR¹³(COOH)-R¹²-OH,

in welcher R¹¹ und R¹² für eine C₁- bis C₄-Alkandiyl-Einheit und R¹³ für eine C₁- bis C₄-Alkyl-Einheit stehen. Vor allem sind Dimethylolbuttersäure und besonders Dimethylolpropionsäure (DMPA) bevorzugt.

Weiterhin eignen sich entsprechende Dihydroxysulfonsäuren und Dihydroxyphosponsäuren wie 2,3-Dihydroxypropanphosphonsäure sowie die entsprechenden Säuren, in denen mindestens eine Hydroxygruppe durch eine Aminogruppe ersetzt ist, beispielsweise solche der Formel

H₂N-R¹¹-CR¹³(COOH)-R¹²-NH₂

in welcher R¹¹, R¹² und R¹³ die gleichen Bedeutungen haben können wie in der vorherigen Formel zu Dihydroxyalkylcarbonsäuren angeführt.

Ansonsten geeignet sind Dihydroxyverbindungen mit einem Molekulargewicht über 500 bis 10000 g/mol mit mindestens 2 Carboxylatgruppen, die aus der DE-A 4 140 486 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxyverbindungen sind insbesondere die als Kettenverlängerer aufgeführten Monomere (b2) sowie die Diole (b1) geeignet.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Säuregruppen, Anhydridgruppen oder tertiäre Aminogruppen.

Ionische Monomere (d) oder potenziell ionische Monomere (d) sind z.B. in Ullmanns Encyklopädie der technischen Chemie, 4. Auflage, Band 19, S.311-313 und beispielsweise in der DE-A 1 495 745 ausführlich beschrieben.

Als potentiell kationische Monomere (d) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure oder Halogenwasserstoffsäuren, starken organischen Säuren, wie beispielsweise Ameisen-, Essig- oder Milchsäure, oder durch Umsetzung mit geeigneten Quaternisierungsmitteln wie C₁- bis C₆-Alkylhalogeniden, z.B. Bromiden oder Chloriden, oder Di-C₁- bis C₆-Alkylsulfaten oder Di-C₁- bis C₆-Alkylcarbonaten in die Ammoniumsalze überführt. Als Monomere (d) mit gegenüber Isocyanaten reaktiven Aminogruppen kommen Aminocarbonsäuren wie Lysin, β-Alanin, die in der DE-A 12 034 479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkyl-aminoalkylcarbonsäuren, wobei die Alkandiyl-Einheiten aus 2 bis 6 Kohlenstoffatome bestehen, in Betracht. Auch Aminosulfonsäuren wie die N-(2-Aminoethyl)-2-aminoethansulfonsäure können vorteilhaft verwendet werden.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die anionischen hydrophilen Gruppen in Form ihrer Salze mit einem Alkaliion oder einem Ammoniumion als Gegenion vor.

Unter diesen genannten Verbindungen sind Hydroxycarbonsäuren bevorzugt, besonders bevorzugt sind Dihydroxyalkylcarbonsäuren, ganz besonders bevorzugt sind α,α-Bis(hydroxymethyl)carbonsäuren, insbesondere Dimethylolbuttersäure und Dimethylolpropionsäure und speziell Dimethylolpropionsäure.

In einer alternativen Ausführungsform können die Polyurethane sowohl nichtionische hydrophile als auch ionische hydrophile Gruppen, bevorzugt gleichzeitig nichtionische hydrophile und anionische hydrophile Gruppen enthalten.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a), (b), (c) und (d) sowie ihre jeweiligen Molmengen so gewählt, dass das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Neben den Komponenten (a), (b), (c) und (d) werden Monomere mit nur einer reaktiven Gruppe im allgemeinen in Mengen bis zu 15 mol-%, bevorzugt bis zu 8 mol-%, bezogen auf die Gesamtmenge der Komponenten (a), (b), (c) und (d) eingesetzt.

Die Polyaddition der Komponenten (a) bis (d) erfolgt im Allgemeinen bei Reaktionstemperaturen von 20 bis 180°C, bevorzugt 50 bis 150°C unter Normaldruck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomere, beeinflusst wird.

Zur Beschleunigung der Reaktion der Diisocyanate können die üblichen Katalysatoren mitverwendet werden. Dafür kommen prinzipiell alle in der Polyurethanchemie üblicherweise verwendeten Katalysatoren in Betracht.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-neodecanoat, Zinn(II)-ethylhexanoat und Zinn(II)-Iaurat und die Dialkylzinn(IV)-salze von organischen Carbonsäuren, z.B.Dimethylzinn-diacetat, Dibutylzinn-diacetat, Dibutylzinndibutyrat, Dibutylzinn-bis(2-ethylhexanoat), Dibutylzinn-dilaurat, Dibutylzinn-maleat, Dioctylzinndilaurat und Dioctylzinn-diacetat. Wismut(III)salze der genannten Säuren sind ebenfalls verwendbar. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinn-dilaurat, Zirkon-Acetylacetonat, Zirkon-2,2,6,6-tetramethyl-3,5-heptandionat und Bi(III) octoat, - neodecanoat und -stearat.

Auch Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Im sogenannten "Präpolymer-Mischverfahren" wird zunächst ein Präpolymer hergestellt wird, das Isocyanat-Gruppen trägt. Die Komponenten (a) bis (d) werden hierbei so gewählt, dass das definitionsgemäße Verhältnis A:B größer 1,0 bis 3, bevorzugt 1,05 bis 1,5 beträgt. Das Präpolymer wird zuerst in Wasser dispergiert und gleichzeitig und/oder anschließend durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Die mittlere Teilchengröße (z-Mittelwert), gemessen mittels dynamischer Lichtstreuung mit dem Malvern® Autosizer 2 C, der erfindungsgemäß hergestellten Dispersionen ist nicht erfindungswesentlich und beträgt im Allgemeinen <1000 nm, bevorzugt <500 nm, besonders bevorzugt < 200 nm und ganz besonders bevorzugt zwischen 20 und unter 200 nm.

Die Dispersionen haben im allgemeinen einen Feststoffgehalt von 10 bis 75, bevorzugt von 20 bis 65 Gew.-% und eine Viskosität von 10 bis 500 mPas (gemessen bei einer Temperatur von 20°C und einer Schergeschwindigkeit von 250 s⁻¹.

Für manche Anwendungen kann es sinnvoll sein, die Dispersionen auf einen anderen, bevorzugt einen niedrigeren, Feststoffgehalt einzustellen, beispielsweise durch Verdünnung.

Weiterhin können die erfindungsgemäß hergestellten Dispersionen mit anderen für die angeführten Anwendungen typischen Komponenten vermischt werden, beispielsweise Tenside, Detergentien, Farbstoffe, Pigmente, Farbübertragungsinhibitoren und optische Aufheller.

Die Dispersionen können nach der Herstellung, falls gewünscht, einer physikalischen Desodorierung unterworfen werden.

Eine physikalische Desodorierung kann darin bestehen, dass die Dispersion mit Wasserdampf, einem sauerstoffhaltigen Gas, bevorzugt Luft, Stickstoff oder überkritischem Kohlendioxid beispielsweise in einem Rührbehälter, wie in der DE 12 48 943 beschrieben, oder in einer Gegenstromkolonne, wie in der DE-A 196 21 027 beschrieben, gestrippt wird.

Die Menge des Lösungsmittels L bei der Herstellung des Polyurethans wird in der Regel so gewählt, dass der Anteil in der fertigen wässrigen Polyurethandispersion, das heißt nach Schritt II und gegebenenfalls Schritt III, 30 Gew.-% nicht überschreitet, bevorzugt nicht mehr als 25, besonders bevorzugt nicht mehr als 20 und ganz besonders bevorzugt nicht mehr als 15 Gew.-%.

Der Anteil an Lösungsmittel L in der fertigen wässrigen Polymerdispersion, insbesondere Polyurethandispersion beträgt in der Regel 0,01 Gew% bis 10 Gew%. In einer Ausführungsform beträgt der Anteil an Lösungsmittel L in der Dispersion 0,01 bis 1 Gew%, bevorzugt 0,01 bis 0,5 Gew%. Dieses ist insbesondere für niedrig siedende Lösungsmittel (Siedepunkt kleiner 100°C bei Normaldruck) wie Aceton der Fall. In einer anderen Ausführungsform beträgt der Anteil an Lösungsmittel L in der Dispersion 1 bis 10 Gew%, bevorzugt 2 bis 6 Gew%. Dieses ist insbesondere für höher siedende Lösungsmittel (Siedepunkt größer 100°C bei Normaldruck) wie N-Methylpyrrolidon, N-Ethylpyrrolidon oder Dipropylenglykoldimethylether der Fall.

Die erfindungsgemäßen wässrigen Polymerdispersionen, insbesondere Polyurethandispersionen eignen sich in vorteilhafter Weise zum Beschichten und Verkleben von Substraten. Geeignete Substrate sind Holz, Holzfurnier, Papier, Pappe, Karton, Textil, Leder, Kunstleder, Vlies, Kunststoffoberflächen, Glas, Keramik, mineralische Baustoffe, Metalle oder beschichtete Metalle. Sie finden Anwendung beispielsweise in der Herstellung von Filmen oder Folien, zum Imprägnieren von Textilien oder Leder, als Dispergiermittel, als Pigmentanreibemittel, als Primer, als Haftvermittler, als Hydrophobiermittel, als Waschmittelzusatz oder als Zusatz in kosmetischen Zubereitungen oder zur Herstellung von Formkörpern oder Hydrogelen oder zur Herstellung von Bekleidung, Fahrzeuginnenausstattungen oder Fahrzeugen

Bei einer Verwendung als Beschichtungsmittel können die Polymerdispersionen, insbesondere Polyurethandispersionen insbesondere als Grundierungen, Füller, pigmentierte Decklacke und Klarlacke im Bereich Autoreparatur- oder Großfahrzeuglackierung eingesetzt werden. Besonders geeignet sind die Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Insbesondere weisen erfindungsgemäße Polymerdispersionen eine niedrige Viskosität auf.

Weiterhin weisen erfindungsgemäße Polymerdispersionen, insbesondere Polyurethandispersionen, eine geringe Emission organischer Verbindungen, insbesondere von Acetaldehyd auf. Insbesondere lassen sich aus erfindungsgemäße Polymerdispersionen, insbesondere Polyurethandispersionen, Filme herstellen, die eine geringe Emission organischer Verbindungen, insbesondere von Acetaldehyd aufweisen.

Ein weiterer Gegenstand der vorliegenden Erfindung sind Beschichtungsmassen, enthaltend mindestens eine erfindungsgemäße Polymerdispersion, insbesondere Polyurethandispersion.

Ein weiterer Gegenstand der vorliegenden Erfindung sind mit erfindungsgemäßen Polymerdispersionen, insbesondere Polyurethandispersionen, beschichtete Gegenstände, zum Beispiel aus Holz, Holzfurnier, Papier, Pappe, Karton, Textil, Leder, Kunstleder, Vlies, Kunststoffen wie Polyurethan, Glas, Keramik, mineralischen Baustoffen, Papier, Metallen oder beschichteten Metallen.

Ein weiterer Gegenstand der Erfindung ist die Verwendung von erfindungsgemäßen Polymerdispersionen, insbesondere Polyurethandispersionen zur Beschichtung, Verklebung oder Imprägnierung von Oberflächen wie Holz, Holzfurnier, Papier, Pappe, Karton, Textil, Leder, Kunstleder, Vlies, Kunststoffen wie Polyurethan, Glas, Keramik, mineralischen Baustoffen, Bekleidung, Möbeln, Automobilinnenausstattung, Fahrzeugen, Papier, Metallen oder beschichteten Metallen.

Ein weiterer Gegenstand der Erfindung sind Beschichtungsmassen enthaltend wässrige Polymerdispersionen, die aus erfindungsgemäßen Polymerdispersionen hergestellt worden sind, sowie damit beschichtete Gegenstände.

In dieser Schrift verwendete ppm- und Prozentangaben beziehen sich, falls nicht anders angegeben, auf Gewichtsprozente und -ppm.

Beispiele:
Astacin® Finish PE ("PE") ist eine wässrige, anionisch stabilisierte aliphatische Polyurethandispersion mit einem Festgehalt von ca. 37 Gew.-% und einem pH-Wert von 7,5.
Additiv 1 ist Dinatriumhydroxysulfonatoacetat (CAS-Nummer 223106-41-0)
Additiv 2 ist Trimethylolpropantrisacetoacetat (CAS-Nr 22208-25-9)
Additiv 3 ist Malonsäuredihydrazid (CAS-Nr. 3815-86-9)

Zu 100 g der wässrigen Dispersion Astacin® Finish PE wurden 1,0 bzw. 5,0 g von Additiv 1 bzw. 2 gegeben. Der freigesetzte Acetaldehyd wurde in Anlehnung an DIN EN ISO 27 587 bestimmt.

| | Einwaage | Acetaldehyd | |
|---|---|---|---|
| | g | ppm | |
| Vergleichsbeispiel 1: ohne Zusatz | 0,52 | 1,25 | Astacin Finish PE |
| Vergleichsbeispiel 1: ohne Zusatz (Wdh.) | 0,56 | 1,57 | Astacin Finish PE |
| Vergleichsbeispiel 2 | 0,52 | 3,65 | PE + 1,0 % Additiv 1 |
| Vergleichsbeispiel 3 | 0,52 | 2,52 | PE + 5,0 % Additiv 1 |
| Beispiel 1 | 0,53 | 0,34 | PE + 1,0 % Additiv 2 |
| Beispiel 2 | 0,51 | 0,26 | PE + 5,0 % Additiv 2 |
| Beispiel 3 | 0,55 | 0,29 | PE + 0,5 % Additiv 3 |
| Beispiel 4 | 0,53 | 0,26 | PE + 1,0 % Additiv 3 |
| Beispiel 5 | 0,52 | 0,25 | PE + 2,5 % Additiv 3 |
| Beispiel 6 | 0,54 | 0,24 | PE + 5,0 % Additiv 3 |

## Patentansprüche

1. Wässrige Polymerdispersion wobei es sich um eine Polyurethandispersion handelt, enthaltend wenigstens eine Verbindung V ausgewählt aus Trimethylolpropantriacetoacetat, Ethylenbis(acetoacetamid), Malonsäurebisamid , Dimethyl-1,3-Acetondicarboxylat, Malonsäuredihydrazid, 2-Cyanoacetoacetamid, Methylcyanoacetat, 2-Cyano-N-(2-hydroxyethyl)acetamid und Methyl 2-(2-hydroxyethylcarbamoyl)ethanol und insbesondere 2-Cyano-N-(2-hydroxyethyl)acetamid und Methyl 2-(2-hydroxyethylcarbamoyl)ethanol.

2. Verfahren zur Herstellung von Polymerdispersionen gemäß Anspruch 1, wobei die Polymerdispersion nach dem Präpolymer-Mischverfahren, dem Schmelz-Dispergier-Prozess oder dem Aceton-Verfahren hergestellt wird, wobei die Zugabe von Verbindung V vor, während oder nach der Herstellung der Polymerdispersionen erfolgt.

3. Verfahren zur Herstellung von Polymerdispersionen gemäß Anspruch 1, enthaltend folgende Schritte:
I. Herstellung eines Polyurethans durch Umsetzung von
a) mindestens einem mehrwertigen Isocyanat mit 4 bis 30 C-Atomen,
b) Diolen, von denen
b1) 10 bis 100 mol-%, bezogen auf die Gesamtmenge der Diole (b), ein Molekulargewicht von 500 bis 5000 aufweisen, und
b2) 0 bis 90 mol-%, bezogen auf die Gesamtmenge der Diole (b), ein Molekulargewicht von 60 bis 500 g/mol aufweisen,
c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und
d) von den Monomeren (a), (b) und (c) verschiedene Monomere mit wenig-stens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
zu einem Polyurethan, gegebenenfalls in Gegenwart eines Lösungsmittels L, und
II. anschließender Dispergierung des Polyurethans in Wasser,
wobei Verbindung V vor, während oder nach Schritt I oder II zugegeben werden kann.

4. Verwendung von Polymerdispersionen gemäß Anspruch 1 zum Beschichten, Imprägnieren und/oder Verkleben von Holz, Holzfurnier, Papier, Pappe, Karton, Textil, Leder, Kunstleder, Vlies, Kunststoffoberflächen, Glas, Keramik, mineralischen Baustoffen, Bekleidung, Möbeln, Automobilinnenausstattung, Fahrzeugen, Papier, Metallen oder beschichteten Metallen.

5. Beschichtungs- Imprägnier- oder Klebmasse enthaltend wässrige Polymerdispersionen gemäß Anspruch 1.

## Claims

1. Aqueous polymer dispersion which is a polyurethane dispersion containing at least one compound V selected from trimethylolpropane triacetoacetate, ethylene bis(acetoacetamide), malonic acid bisamide, dimethyl 1,3-acetone dicarboxylate, malonic acid dihydrazide, 2-cyanoacetoacetamide, methyl cyanoacetate, 2-cyano-N-(2-hydroxyethyl)acetamide and methyl 2-(2-hydroxyethylcarbamoyl)ethanol and in particular 2-cyano-N-(2-hydroxyethyl)acetamide and methyl 2-(2-hydroxyethylcarbamoyl)ethanol.

2. Process for the preparation of polymer dispersions according to claim 1, wherein the polymer dispersion is prepared by the prepolymer mixing process, the melt dispersion process or the acetone process, wherein the addition of compound V takes place before, during or after the preparation of the polymer dispersions.

3. Process for the preparation of polymer dispersions according to claim 1, comprising the following steps:
I. Preparation of a polyurethane by conversion of
a) at least one polyvalent isocyanate with 4 to 30 carbon atoms,
b) Diols, of which
b1) 10 to 100 mol%, based on the total amount of the diols (b), have a molecular weight of 500 to 5000, and
b2) 0 to 90 mol%, based on the total amount of the diols (b), have a molecular weight of 60 to 500 g/mol,
c) optionally other polyvalent compounds different from the diols (b) and having reactive groups which are alcoholic hydroxyl groups or primary or secondary amino groups, and
d) monomers different from the monomers (a), (b) and (c) and having at least one isocyanate group or at least one group which is reactive towards isocyanate groups and which furthermore carry at least one hydrophilic group or a potentially hydrophilic group, whereby the water dispersibility of the polyurethanes is effected,
to a polyurethane, optionally in the presence of a solvent L, and
II. subsequent dispersion of the polyurethane in water, wherein compound V may be added before, during or after step I or II.

4. Use of polymer dispersions according to claim 1 for coating, impregnating and/or bonding wood, wood veneer, paper, paperboard, cardboard, textile, leather, artificial leather, nonwoven fabric, plastic surfaces, glass, ceramics, mineral building materials, clothing, furniture, automotive interiors, vehicles, paper, metals or coated metals.

5. Coating composition, impregnating composition, or adhesive composition containing aqueous polymer dispersions according to claim 1.

## Revendications

1. Dispersion aqueuse de polymères, dans laquelle il s'agit d'une dispersion de polyuréthanne contenant au moins un composé V choisi parmi le triacétoacétate de triméthylolpropane, l'éthylènebis(acétoacétamide), le bisamide de l'acide malonique, le 1,3-acétonedicarboxylate de diméthyle, le dihydrazide de l'acide malonique, le 2-cyanoacétoacétamide, le cyanoacétate de méthyle, le 2-cyano-N-(2-hydroxyéthyl)acétamide et le méthyl 2-(2-hydroxyéthylcarbamoyl)éthanol, et en particulier le 2-cyano-N-(2-hydroxyéthyl)acétamide et le méthyl 2-(2-hydroxyéthylcarbamoyl)éthanol.

2. Procédé de préparation de dispersions de polymères selon la revendication 1, dans lequel la dispersion de polymères est préparée par le procédé de mélange de prépolymères, le procédé de dispersion à l'état fondu ou le procédé à l'acétone, l'addition du composé V s'effectuant avant, pendant ou après la préparation des dispersions de polymères.

3. Procédé de préparation de dispersions de polymères selon la revendication 1, contenant les étapes suivantes :
I. Préparation d'un polyuréthanne par réaction
a) d'au moins un polyisocyanate ayant 4 à 30 atomes de carbone,
b) de diols, parmi lesquels
b1) 10 à 100 % en moles, par rapport à la quantité totale des diols (b), présentent une masse moléculaire de 500 à 5 000, et
b2) 0 à 90 % en moles, par rapport à la quantité totale des diols (b), présentent une masse moléculaire de 60 à 500 g/mole,
c) éventuellement, d'autres composés polyvalents différents des diols (b), comportant des groupes réactifs, dans lesquels il s'agit de groupes hydroxyle alcooliques ou de groupes amino primaires ou secondaires, et
d) de monomères différents des monomères (a), (b) et (c), ayant au moins un groupe isocyanate et au moins un groupe réactif vis-à-vis des groupes isocyanate, qui en outre portent au moins un groupe hydrophile ou un groupe potentiellement hydrophile, ce qui provoque la dispersibilité dans l'eau des polyuréthannes,
pour obtenir un polyuréthanne, éventuellement en présence d'un solvant L, et
II. puis dispersion du polyuréthanne dans de l'eau, le composé V pouvant être ajouté avant, pendant ou après l'étape I ou II.

4. Utilisation de dispersions de polymères selon la revendication 1 pour le revêtement, l'imprégnation et/ou le collage de bois, de placage de bois, de papier, de carton-pâte, de carton, d'un textile, de cuir, de similicuir, d'un non-tissé, de surfaces plastiques, de verre, de céramique, de matériaux de construction minéraux, de vêtements, de meubles, d'équipements internes pour automobile, de véhicules, de papier, de métaux ou de métaux revêtus.

5. Composition de revêtement, d'imprégnation ou de collage contenant des dispersions aqueuses de polymères selon la revendication 1.
